# EUROPÄISCHE PATENTSCHRIFT

(11) **EP 3 265 636 B1**
(45) Veröffentlichungstag und Bekanntmachung des Hinweises auf die Patenterteilung: **20.04.2022**
(21) Anmeldenummer: 16706875.8
(22) Anmeldetag: 29.02.2016
(51) Int. Cl.: E06B 3/663

(54) **GLASFASERVERSTÄRKTES ABSTANDSSTÜCK FÜR EISENVERGLASUNG, VERFAHREN ZU DESSEN HERSTELLUNG UND VERWENDUNG EINES SOLCHEN ABSTANDHALTERS IN MEHRFACHVERGLASUNGEN**
GLASS FIBRE REINFORCED SPACER FOR INSULATING GLAZING, METHOD FOR MANUFACTURING THE SAME AND USE OF SUCH A SPACER IN MULTIPLE GLAZING
ECARTEUR RENFORCÉ EN FIBRES DE VERRE POUR VITRAGE ISOLANT, PROCÉDÉ POUR SA FABRICATION ET UTILISATION D'UN TEL ÉCARTEUR DANS UN VITRAGE MULTIPLE

(30) Priorität: 02.03.2015 EP 15157110
(43) Veröffentlichungstag der Anmeldung: 10.01.2018
(73) Patentinhaber: SAINT-GOBAIN GLASS FRANCE, 92400 Courbevoie (FR)
(72) Erfinder: SCHWERDT, Egbert, 8572 Berg (CH); SCHREIBER, Walter, 52074 Aachen (DE); RIGAUD, Martin, 8422 Pfungen (CH)
(74) Vertreter: Gebauer, Dieter Edmund
(86) Internationale Anmeldenummer: PCT/EP2016/054226
(87) Internationale Veröffentlichungsnummer: WO 2016/139180

(56) Entgegenhaltungen:
- EP-A1- 2 930 296
- WO-A1-2013/104507
- DE-A1- 19 807 454
- DE-A1- 19 807 454

## Beschreibung

Die Erfindung betrifft einen glasfaserverstärkten Abstandshalter für Isolierverglasung, ein Verfahren zu dessen Herstellung und dessen Verwendung.

Im Fenster- und Fassadenbereich von Gebäuden werden heutzutage fast ausschließlich Isolierverglasungen eingesetzt. Isolierverglasungen bestehen zumeist aus zwei Glasscheiben, welche durch einen Abstandshalter (Spacer) in einem definierten Abstand zueinander angeordnet sind. Der Abstandshalter ist umlaufend im Randbereich der Verglasung angeordnet. Zwischen den Scheiben ist somit ein Zwischenraum ausgebildet, welcher in der Regel mit einem Inertgas gefüllt ist. Der Wärmefluss zwischen dem von der Verglasung begrenzten Innenraum und der äußeren Umgebung kann durch die Isolierverglasung im Vergleich zu einer einfachen Verglasung erheblich reduziert werden.

Der Abstandshalter hat einen nicht zu vernachlässigenden Einfluss auf die thermischen Eigenschaften der Scheibe. Herkömmliche Abstandshalter bestehen aus einem Leichtmetall, üblicherweise Aluminium. Diese lassen sich leicht verarbeiten. Der Abstandshalter wird typischerweise als gerades Endlos-Profil hergestellt, welches auf die benötigte Größe zurechtgeschnitten und dann durch Biegen in die rechteckige Form gebracht wird, welche für den Einsatz in der Isolierverglasung notwendig ist. Aufgrund der guten Wärmeleitfähigkeit des Aluminiums wird die isolierende Wirkung der Verglasung im Randbereich allerdings deutlich herabgesetzt *(cold* edge-Effekt).

Um die thermischen Eigenschaften zu verbessern, sind sogenannte *warm edge*-Lösungen für Abstandshalter bekannt. Diese Abstandshalter bestehen insbesondere aus Kunststoff und weisen folglich eine deutlich verringerte Wärmeleitfähigkeit auf. Kunststoff-Abstandshalter sind beispielsweise aus DE 27 52 542 C2 oder DE 19 625 845 A1 bekannt.

WO 2013/104507 A1 offenbar einen Abstandshalter mit einem polymeren Grundkörper und einer Isolationsfolie. Die Isolationsfolie enthält dabei eine polymere Folie und mindestens zwei metallische oder keramische Schichten, die alternierend mit mindestens einer polymeren Schicht angeordnet sind, wobei bevorzugt die außen liegenden Schichten polymere Schichten sind. Die metallischen Schichten weisen eine Dicke unter einem µm auf und müssen durch polymere Schichten geschützt werden. Ansonsten kommt es bei der automatisierten Verarbeitung der Abstandshalter beim Zusammenbau der Isolierverglasungen leicht zu Beschädigungen der metallischen Schichten.

EP 0 852 280 A1 offenbart einen Abstandshalter für Mehrscheiben-Isolierverglasungen. Der Abstandshalter umfasst eine Metallfolie mit einer Dicke unter 0,1 mm an der Verklebungsfläche und einen Glasfaseranteil im Kunststoff des Grundkörpers. Die außen liegende Metallfolie ist während der Weiterverarbeitung in der Isolierverglasung hohen mechanischen Belastungen ausgesetzt. Insbesondere wenn Abstandshalter auf automatisierten Fertigungslinien weiterverarbeitet werden, kommt es leicht zu Beschädigungen der Metallfolie und damit zur Verschlechterung der Barrierewirkung.

Es besteht Bedarf an Abstandshaltern für Isolierverglasungen, welche eine minimale Wärmeleitfähigkeit gewährleisten und dennoch einfach zu verarbeiten sind. Es besteht insbesondere Bedarf an Abstandshaltern, bei denen die thermischen Eigenschaften bei Beibehaltung der mechanischen Eigenschaften weiter verbessert werden und die bei reduzierten Kosten hergestellt werden können.

Die nachveröffentlichte europäische Patentanmeldung EP 2930296 A1 offenbart einen Abstandshalter für eine Isolierverglasung mit einem aufgeschäumten Grundkörper. DE 198 07 454 A1 offenbart noch einen gattungsgemäßen Abstandhalter.

Der vorliegenden Erfindung liegt die Aufgabe zugrunde, einen solchen Abstandshalter für die Isolierglasfertigung bereitzustellen. Der vorliegenden Erfindung liegt weiter die Aufgabe zugrunde, ein Verfahren zur Herstellung eines solchen Abstandshalters für die Isolierglasfertigung bereitzustellen. Der vorliegenden Erfindung liegt weiter die Aufgabe zugrunde, eine Verwendung eines solchen Abstandshalters für die Isolierglasfertigung bereitzustellen. Die der vorliegenden Erfindung zugrundeliegende Aufgabe wird durch einen Abstandshalter für die Isolierglasfertigung gemäß Patentanspruch 1 gelöst.

Die der vorliegenden Erfindung zugrundeliegende Aufgabe wird durch einen Abstandshalter für die Isolierglasfertigung gelöst, der einen polymeren Grundkörper umfasst, der mindestens zwei zueinander parallele Seitenwände, die miteinander verbunden sind durch eine Innenwand und eine Außenwand, wobei die Seitenwände, die Innenwand und die Außenwand eine Hohlkammer umgeben, wobei der Grundkörper einen Glasfaser-Anteil von 0 Gew.-% bis 40 Gew.-% aufweist und durch eingeschlossene gasgefüllte Hohlräume eine Reduktion des Gewichts von 10 Gew.-% bis 20 Gew.-% aufweist.

Die Lösung der vorliegenden Aufgabe wird durch einen erfindungsgemäßen Abstandshalter für die Isolierverglasung erreicht, der durch das Schäumen des Kunststoffes im Extrusionsprozess hergestellt wird. Der erfindungsgemäße Abstandshalter weist eine Verbesserung der thermischen Eigenschaften auf unter Beibehaltung der mechanischen Eigenschaften bei reduzierten Herstellungskosten.

Bei dem erfindungsgemäßen Abstandshalter werden durch Schäumen während der Extrusion die Wände des Hohlprofils nicht mehr als Vollmaterial ausgebildet, sondern sind durchsetzt von Gasblasen, daher Hohlräumen. Hierdurch werden 10 Gew.-% bis 20 Gew.-% bevorzugt von 11 Gew.-% bis 14 Gew.-% des Materials eingespart.

Der erfindungsgemäße Abstandshalter weist eine wesentlich höhere Belastbarkeit und Bruchfestigkeit auf. Der erfindungsgemäße Abstandshalter weist eine wesentlich höhere Elastizität auf.

Bei dem erfindungsgemäßen Abstandshalter wird ein glasfaserverstärkter Kunststoff durch geringes Aufschäumen während der Extrusion in seinen thermischen Eigenschaften verbessert, ohne dass dabei dessen mechanische Eigenschaften verschlechtert werden. Bei den thermischen Eigenschaften wurde eine Verbesserung um bis zu 45 % gemessen. Die thermischen Eigenschaften werden durch die in den Hohlräumen eingeschlossenen Gase stark verbessert. Die in den Hohlräumen eingeschlossenen ruhenden Gase wirken als ein sehr guter Isolator.

Erfindungsgemäß werden die eingeschlossenen gasgefüllten Hohlräume durch Zugabe mindestens eines Schäumungsmittels erhalten. Es handelt sich bevorzugt um chemisches Schäumen. Dem Kunststoffgranulat wird ein Treibmittel, meist in Form eines so genannten Masterbatchgranulates, zugegeben. Durch Wärmezufuhr spaltet sich ein flüchtiger Bestandteil meist Kohlendioxid des Treibmittels ab, was zum Aufschäumen der Schmelze führt.

Erfindungsgemäß beträgt die Menge des zugegebenen Schäumungsmittels 0,5 Gew.-% bis 1,5 Gew.-%. Das Schäumungsmittel wird als Granulat zu dem Polymer vor dem Schmelzen im Extruder zugegeben.

Eine bevorzugte Ausgestaltung der vorliegenden Erfindung ist ein Abstandshalter, wobei die Menge des zugegebenen Schäumungsmittels 0,7 Gew.-% bis 1,0 Gew.-% beträgt. In diesem Bereich werden mit dem Schäumungsmittel besonders gute Ergebnisse erzielt.

Eine bevorzugte Ausgestaltung der vorliegenden Erfindung ist ein Abstandshalter, wobei der Grundkörper 1,0 Gew.-% bis 4,0 Gew.-%, bevorzugt 1,3 Gew.-% bis 2,0 Gew.-% Farb-Masterbatch enthält. In diesem Bereich wird eine besonders gute Farbwirkung erzielt. Das Farb-Masterbatch im Sinne der Erfindung bezeichnet ein Kunststoffadditiv in Form eines Granulates, das ein Farbmittel enthält.

Eine bevorzugte Ausgestaltung der vorliegenden Erfindung ist ein Abstandshalter, wobei der Grundkörper (I) bis zu einer angewandten Kraft von 1800 N bis 2500 N bruchfest ist. Die hohe Bruchfestigkeit ist für den Abstandshalter sehr vorteilhaft.

Eine bevorzugte Ausgestaltung der vorliegenden Erfindung ist ein Abstandshalter, wobei der Grundkörper (I) zumindest, Polyethylen (PE), Polycarbonate (PC), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Polypropylen (PP), Acrylnitril-Butadien-Styrol (ABS), Acrylester-Styrol-Acrylnitril (ASA), Acrylnitril-Butadien-Styrol-Polycarbonat (ABS/PC), Styrol-Acrylnitril (SAN), Polyethylenterephthalat-Polycarbonat (PET/PC), Polybutylenterephthalat-Polycarbonat (PBT/PC) oder Copolymere oder Derivate oder Gemische davon enthält.

Eine besonders bevorzugte Ausgestaltung der vorliegenden Erfindung ist ein Abstandshalter, wobei der Grundkörper (I) zumindest, Styrol-Acrylnitril (SAN) oder Polypropylen (PP), oder Copolymere oder Derivate oder Gemische davon enthält. Mit diesen Polymeren werden insbesondere beim Aufschäumen sehr gute Ergebnisse im Hinblick auf thermische Eigenschaften sowie Bruchfestigkeit und Elastizität erreicht.

Erfndungsgemäß weist der Abstandshalter zumindest auf der Außenwand eine Isolationsfolie auf, welche eine polymere Trägerfolie und mindestens eine metallische oder keramische Schicht enthält, die Dicke der polymeren Trägerfolie der Isolationsfolie von 10 µm bis 100 µm und die Dicke der metallischen oder keramischen Schicht der Isolationsfolie von 10 nm bis 1500 nm beträgt und wobei die Isolationsfolie mindestens eine weitere polymere Schicht mit einer Dicke von 5 µm bis 100 µm enthält und die metallische oder keramische Schicht der Isolationsfolie zumindest Eisen, Aluminium, Silber, Kupfer, Gold, Chrom, Siliziumoxid, Siliziumnitrid oder Legierungen oder Gemische oder Oxide davon enthält und wobei die polymere Trägerfolie der Isolationsfolie zumindest Polyethylenterephthalat, Ethylenvinylalkohol, Polyvinyliden-chlorid, Polyamide, Polyethylen, Polypropylen, Silikone, Acrylonitrile, Polymethylacrylate oder Copolymere oder Gemische enthält.

Eine bevorzugte Ausgestaltung der vorliegenden Erfindung ist ein Abstandshalter, wobei in jede Seitenwand ein Verstärkungsstreifen eingelagert ist, welcher zumindest ein Metall oder eine metallische Legierung, bevorzugt Stahl enthält und eine Dicke von 0,05 mm bis 1 mm, und eine Breite von 1 mm bis 5 mm aufweist. Durch den eingelagerten Verstärkungsstreifen erhält der Abstandshalter eine unerwartete Stabilität.

Die Verstärkungsstreifen verleihen dem Abstandshalter die notwendige Biegbarkeit, um auch mit herkömmlichen industriellen Anlagen verarbeitet zu werden. Der Abstandshalter kann in seine endgültige Form gebogen werden, ohne vorher erwärmt werden zu müssen. Durch die Verstärkungsstreifen bleibt die Form dauerhaft stabil. Zudem erhöht der Verstärkungsstreifen die Stabilität des Abstandshalters. Die Verstärkungsstreifen wirken aber nicht als Wärmebrücke, so dass die Eigenschaften des Abstandshalters hinsichtlich der Wärmeleitung nicht wesentlich negativ beeinflusst werden. Dies hat insbesondere zwei Gründe: (a) die Verstärkungsstreifen sind in den polymeren Grundkörper eingelagert, haben also keinen Kontakt zur Umgebung; (b) die Verstärkungsstreifen sind in den Seitenwänden angeordnet und nicht etwa in der Außenwand oder der Innenwand, über welche der Wärmeaustausch zwischen Scheibenzwischenraum und äußerer Umgebung erfolgt. Die gleichzeitige Realisierung von Biegbarkeit und optimalen thermischen Eigenschaften sowie die erhöhte Bruchfestigkeit und Elastizität sind entscheidende Vorteile dieser bevorzugten Ausführungsform.

Die Aufgabe der vorliegenden Erfindung wird weiter durch ein Verfahren zur Herstellung eines erfindungsgemäßen Abstandshalters für eine Isolierverglasung gelöst, wobei
a) ein Gemisch aus mindestens einem Polymer, Farb- Masterbatch und Schäumungsmittel bereitgestellt wird,
b) das Gemisch in einem Extruder bei einer Temperatur von 170 °C bis 230 °C geschmolzen wird,
c) das Schäumungsmittel zersetzt wird und flüchtige Bestandteile die Schmelze aufschäumen,
d) die Schmelze durch ein Formwerkzeug gedrückt und ein Grundkörper erhalten wird,
e) der Grundkörper stabilisiert wird und
f) der Grundkörper abgekühlt wird.

Eine bevorzugte Ausgestaltung der Erfindung ist ein Verfahren, wobei ein Granulat Gemisch mindestens enthaltend 95,0 Gew.-% bis 99,0 Gew.-% Polymer mit 30,0 Gew.-% bis 40,0 Gew.-% Glasfaser, 1,0 Gew.-% bis 4,0 Gew.-% Farb-Masterbatch und 0,5 Gew.-% bis 1,5 Gew.-% Schäumungsmittel bereitgestellt wird. Dieses Mischungsverhältnis zur Erzeugung eines geschäumten Abstandshalters ist besonders vorteilhaft.

Eine bevorzugte Ausgestaltung der Erfindung ist ein Verfahren, wobei das Gemisch in einem Extruder bei einer Temperatur von 215 °C bis 220 °C geschmolzen wird. Bei diesen Schmelztemperaturen werden sehr gute Ergebnisse beim aufgeschäumten Abstandshalter erhalten.

Die Erfindung umfasst weiter die Verwendung des erfindungsgemäßen Abstandshalters in Mehrfachverglasungen, bevorzugt in Isolierverglasungen. Die Isolierverglasungen werden bevorzugt verwendet als Fensterverglasungen oder Fassadenverglasungen von Gebäuden.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen perspektivischen Querschnitt durch eine Ausgestaltung des erfindungsgemäßen Abstandshalters,
- Fig. 2: einen Querschnitt durch eine Ausgestaltung der erfindungsgemäßen Isolierverglasung mit dem erfindungsgemäßen Abstandshalter,
- Fig. 3: ein Flussdiagramm einer Ausführungsform des erfindungsgemäßen Verfahrens,
- Fig. 4: eine mikroskopische Aufnahme des Querschnitts des geschäumten Hohlprofils.

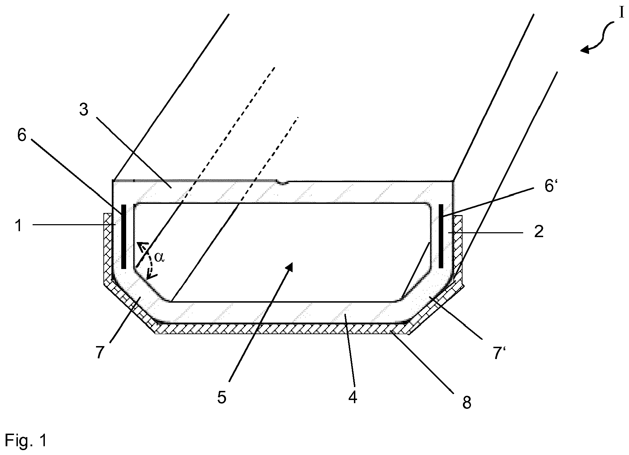

Fig. 1 zeigt einen Querschnitt durch einen erfindungsgemäßen Abstandshalter für eine Isolierverglasung. Der Abstandshalter umfasst einen polymeren Grundkörper I, welcher beispielsweise aus Polypropylen (PP) oder aus Styrol-Acrylnitril (SAN) besteht. Das Polymer weist dabei einen Glasfaseranteil von 0 Gew.-% bis 40 Gew.-% auf.

Der Grundkörper I umfasst zwei zueinander parallele Seitenwände 1, 2, welche dafür vorgesehen sind, mit den Scheiben des Isolierglases in Kontakt gebracht zu werden. Zwischen jeweils einem Ende jeder Seitenwand 1, 2 verläuft eine Innenwand 3, welche dafür vorgesehen ist, dem Scheibenzwischenraum des Isolierglases zugewandt zu werden. An den anderen Enden der Seitenwände 1, 2 schließt sich jeweils ein Verbindungsabschnitt 7, 7' an. Über die Verbindungsabschnitte 7, 7' sind die Seitenwände 1, 2 mit einer Außenwand 4 verbunden, welche parallel zur Innenwand 3 ausgebildet ist. Der Winkel α zwischen den Verbindungsabschnitten 7 (beziehungsweise 7') und der Seitenwand 3 (beziehungs-weise 4) beträgt etwa 45°. Daraus ergibt sich, dass auch der Winkel zwischen der Außenwand 4 und den Verbindungsabschnitten 7, 7' etwa 45° beträgt. Der Grundkörper I umgibt eine Hohlkammer 5.

Die Materialstärke (Dicke) der Seitenwände 1, 2, der Innenwand 3, der Außenwand 4 und der Verbindungsabschnitte 7, 7' ist etwa gleich und beträgt beispielsweise 1 mm. Der Grundkörper weist beispielsweise eine Höhe von 6,5 mm und eine Breite von 15 mm auf.

In jede Seitenwand 1, 2 ist ein Verstärkungsstreifen 6 eingelagert. Die Ver-stärkungsstreifen 6, 6' bestehen aus Stahl, welcher kein Edelstahl ist, und weisen eine Dicke (Materialstärke) von beispielsweise 0,3 mm auf und eine Breite von beispielsweise 3 mm. Die Länge der Verstärkungsstreifen 6, 6' entspricht der Länge des Grundkörpers I.

Die Verstärkungsstreifen verleihen dem Grundkörper I eine hinreichende Biegbarkeit und Stabilität, um ohne vorherige Erwärmung gebogen zu werden und die gewünschten Form dauerhaft beizubehalten. Im Gegensatz zu anderen Lösungen nach dem Stand der Technik weist der Abstandshalter dabei eine sehr geringe Wärmeleitfähigkeit auf, weil die metallischen Verstärkungsstreifen 6, 6' nur in die Seitenwände 1,2 eingelagert sind, über welche nur ein sehr geringer Teil des Wärmeaustauschs zwischen Scheibeninnenraum und äußerer Umgebung stattfindet. Die Verstärkungsstreifen 6, 6' nicht als Wärmebrücke. Das sind große Vorteile der vorliegenden Erfindung.

Auf der Außenfläche der Außenwand 4 und der Verbindungsabschnitte 7, 7' sowie einem Abschnitt der Außenfläche jeder der Seitenwände 1, 2 ist bevorzugt eine Isolationsfolie 8 angeordnet. Die Isolationsfolie 8 verringert eine Diffusion durch den Abstandshalter hindurch. Dadurch kann der Feuchtigkeitseintritt in den Scheibeninnenraum einer Isolierverglasung oder der Verlust der Inertgasfüllung des Scheibeninnenraums verringert werden. Die Isolationsfolie 8 verbessert außerdem die thermischen Eigenschaften des Abstandshalters, verringert also die Wärmeleitfähigkeit.

Die Isolationsfolie 8 umfasst die folgende Schichtenfolge: eine polymere Trägerfolie (bestehend aus LLDPE (lineares Polyethylen niedriger Dichte), Dicke: 24 µm) / eine metallische Schicht (bestehend aus Aluminium, Dicke: 50 nm) / eine polymere Schicht (PET, 12 µm) / eine metallische Schicht (Al, 50 nm) / eine polymere Schicht (PET, 12 µm). Der Schichtstapel auf der Trägerfolie enthält also zwei polymeren Schichten und zwei metallische Schichten, wobei die polymeren Schichten und die metallischen Schichten alternierend angeordnet sind. Der Schichtstapel kann auch weitere metallische Schichten und/oder polymere Schichten umfassen, wobei metallische und polymere Schichten bevorzugt ebenfalls alternierend angeordnet sind, so dass zwischen jeweils zwei benachbarten metallischen Schichten eine polymere Schicht angeordnet ist und oberhalb der obersten metallischen Schicht eine polymere Schicht angeordnet ist.

Durch den Verbund aus polymerem Grundkörper I, den Verstärkungsstreifen 6,6' und der Isolationsfolie 8 weist der erfindungsgemäße Abstandshalter vorteilhafte Eigenschaften hinsichtlich der Steifigkeit, der Dichtigkeit und der Wärmeleitfähigkeit auf. Er eignet sich daher in besonderem Maße für die Verwendung in Isoliergläser, insbesondere im Fenster- oder Fassadebereich von Gebäuden.

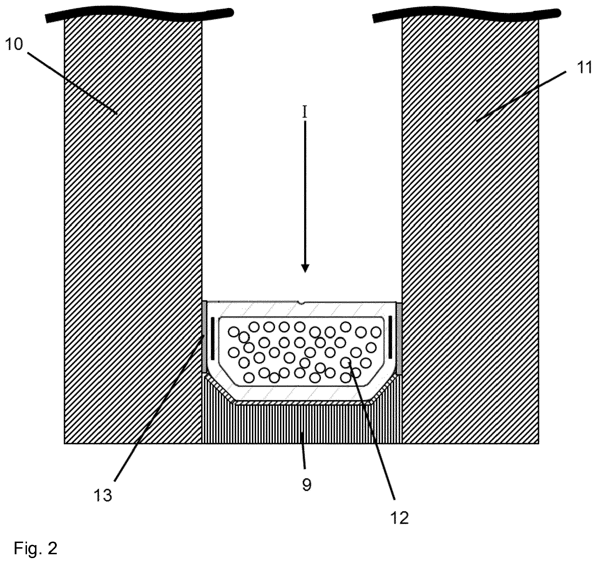

Fig. 2 zeigt einen Querschnitt durch ein erfindungsgemäßes Isolierglas im Bereich des Abstandshalters. Das Isolierglas besteht aus zwei Glasscheiben 10, 11 aus Kalk-Natron-Glas mit einer Dicke von beispielsweise 3 mm, die über einen im Randbereich angeordneten erfindungsgemäßen Abstandshalter miteinander verbunden sind. Der Abstandshalter ist der Abstandshalter gemäß Fig. 1 mit den Verstärkungsstreifen 6,6' und der Isolationsfolie 8.

Die Seitenwände 1, 2 des Abstandshalters sind über jeweils eine Dichtungsschicht 13 mit den Glasscheiben 10, 11 verbunden. Die Dichtungsschicht 13 besteht beispielsweise aus Butyl. Im Randraum des Isolierglases zwischen den Glasscheiben 10, 11 und dem Abstandshalter ist umlaufend eine äußere Dichtmasse 9 angeordnet. Die Dichtmasse 9 ist beispielsweise ein Silikonkautschuk.

Die Hohlkammer 5 des Grundkörper I ist bevorzugt mit einem Trockenmittel 12 gefüllt. Das Trockenmittel 12 ist beispielsweise ein Molekularsieb. Das Trockenmittel 12 nimmt eine zwischen den Glasscheiben und dem Abstandshalter vorhandene Restfeuchtigkeit auf und verhindert so das Beschlagen der Scheiben 10, 11 im Scheibenzwischenraum. Die Wirkung des Trockenmittels 12 wird durch nicht dargestellte Löcher in der Innenwand 3 des Grundkörpers I begünstigt.

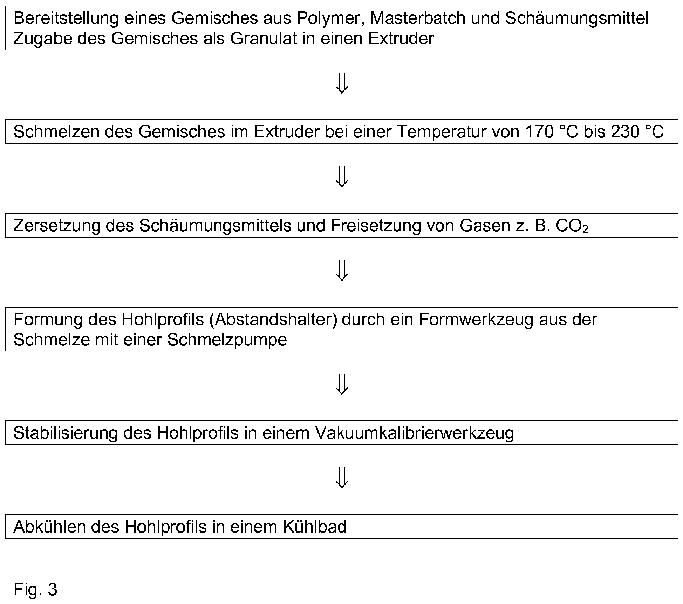

Fig. 3 zeigt ein Flussdiagramm eines Ausführungsbeispiels des erfindungsgemäßen Verfahrens zur Herstellung eines Abstandshalters für ein Isolierglas.

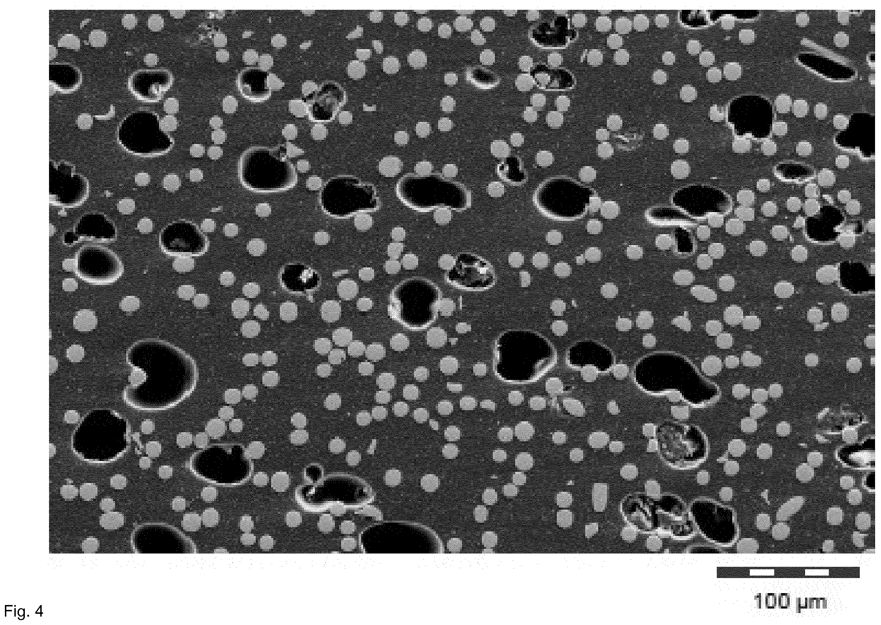

Fig. 4 zeigt eine mikroskopische Aufnahme des Querschnitts des geschäumten Hohlprofils. Zu sehen ist das Polymer Styrol-Acrylnitril (SAN). Deutlich sichtbar sind die dunkelfarbigen Hohlräume. Die Wände zwischen den einzelnen Zellen, den Hohlräumen, sind komplett geschlossen. Die Hohlräume werden durch chemisches Schäumen erhalten. Dabei wird dem Kunststoffgranulat ein Treibmittel, meist in Form eines so genannten Masterbatchgranulates, zugegeben. Durch Wärmezufuhr spaltet sich ein flüchtiger Bestandteil des Treibmittels ab, was zum Aufschäumen der Schmelze führt.

### Vergleichsbeispiel

### Verfahren zur Herstellung eines ungeschäumten Abstandshalters

Ein Gemisch aus:
98,5 Gew.-% Styrol-Acrylnitril (SAN) mit 35 Gew.-% Glasfaser (A. Schulmann) und
1,5 Gew.-% Farb-Masterbatch Sicoversal^{®} schwarz (BASF)
wurde als Granulat in einen Extruder gegeben und im Extruder bei einer Temperatur von 218 °C aufgeschmolzen. Die Schmelze wurde mit einer Schmelzpumpe durch ein Formwerkzeug zu einem Hohlprofil (Abstandshalter) geformt. Das noch weiche Hohlprofil mit einer Temperatur von etwa 170 °C wurde in einem Vakuumkalibrierwerkzeug stabilisiert. Dadurch wurde die Geometrie des Hohlprofils gesichert. Danach wurde das Hohlprofil durch ein Kühlbad geleitet und wies schließlich Raumtemperatur auf.

Das Hohlprofil wies eine Wandstärke von 1,0 mm ± 0,1 mm auf.

Die Gesamtbreite des Hohlprofils betrug 15,5 mm ± 0,1 mm.

Die Gesamthöhe des Hohlprofils betrug 6,5 mm - 0,05 mm + 0,25.

Das Gewicht des Hohlprofils betrug 52 g/m.

Die mechanische Festigkeit des Hohlprofils betrug >600 N/cm.

### Beispiel

### Verfahren zur Herstellung eines geschäumten Abstandshalters

Ein Gemisch aus:
97,7 Gew.-% Styrol-Acrylnitril (SAN) mit 35 Gew.-% Glasfaser (A. Schulmann)
1,5 Gew.-% Farb-Masterbatch Sicoversal^{®} schwarz (BASF) und
0,8 Gew.-% Schäumungsmittel Polybatch 8850 E (A. Schulmann)
wurde als Granulat in einen Extruder gegeben und im Extruder bei einer Temperatur von 218 °C aufgeschmolzen. Dabei fand die Zersetzung des Schäumungsmittels unter Freisetzung von CO₂ statt. Die Schmelze wurde mit einer Schmelzpumpe durch ein Formwerkzeug zu einem Hohlprofil (Abstandshalter) geformt. Das noch weiche Hohlprofil mit einer Temperatur von etwa 170 °C wurde in einem Vakuumkalibrierwerkzeug stabilisiert. Dadurch wurde die Geometrie des Hohlprofils gesichert. Danach wurde das Hohlprofil durch ein Kühlbad geleitet und wies schließlich Raumtemperatur auf.

Das Hohlprofil wies eine Wandstärke von 1,0 mm ± 0,1 mm auf.

Die Gesamtbreite des Hohlprofils betrug 15,5 mm ± 0,1 mm.

Die Gesamthöhe des Hohlprofils betrug 6,5 mm - 0,05 mm + 0,25.

Das Gewicht des Hohlprofils betrug 45 g/m.

Die mechanische Festigkeit des Hohlprofils beträgt > 600 N/cm.

Ein Vergleich zwischen dem ungeschäumten Hohlprofil nach Vergleichsbeispiel 1 und dem erfindungsgemäß geschäumten Hohlprofil nach Beispiel 1 ergibt sich aus Tabelle 1.

**Tabelle 1**

| | Vergleichsbeispiel 1 | Beispiel 1 |
|---|---|---|
| Wandstärke des Hohlprofils | 1,0 mm ± 0,1 mm | 1,0 mm ± 0,1 mm |
| Breite des Hohlprofils | 15,5 mm ± 0,1 m | 15,5 mm ± 0,1 mm |
| Höhe des Hohlprofils | 6,5 mm - 0,05 mm + 0,25 | 6,5 mm - 0,05 mm + 0,25 |
| Mechanische Festigkeit | > 600 N/cm | > 600 N/cm |
| Gewicht des Hohlprofils | 52 g/m | 45 g/m |

Beim erfindungsgemäßen Hohlprofil wurde bei gleicher mechanischer Festigkeit eine Materialersparnis von 7 Gramm pro Meter erreicht. Das bedeutet eine Materialersparnis bezogen auf 52 Gramm pro Meter von 13,46 %.

Ein weiterer Vergleich zwischen dem ungeschäumten Hohlprofil nach Vergleichsbeispiel 1 und dem erfindungsgemäß geschäumten Hohlprofil nach Beispiel 1 ergibt sich aus Tabelle 2.

Dazu wurden jeweils 12 Proben ungeschäumten und geschäumten Hohlprofils gemessen. Es wurden Kraft/Dehnungsmessungen durchgeführt. Dazu wurde auf eine Probe die maximale Kraft Fₘₐₓ (N) angewandt, bis die Probe bricht. Differenzlänge, DL (mm) bei Fₘₐₓ (N) ist der Weg, den zwei Prüfbacken bei maximaler Kraft gehen müssen bis der Hohlkörper bricht. In der Tabelle bedeutet X den Durchschnittswert, S die Streuung und V die Standartabweichung.

**Tabelle 2**

| Serie | Ungeschäumtes Hohlprofil | | Geschäumtes Hohlprofil | |
|---|---|---|---|---|
| N = 12 | Fₘₐₓ (N) | DL (mm) bei Fₘₐₓ (N) | Fₘₐₓ (N) | DL (mm) bei Fₘₐₓ (N) |
| X | 1150 | 0,4 | 2290 | 0,7 |
| S | 141 | 0,1 | 730 | 0,2 |

Der Vergleich der gemessenen Fₘₐₓ (N) Wert des ungeschäumten Hohlprofils von 1150 N mit dem des geschäumten Holprofils mit 2290 N, dann wird deutlich, dass das erfindungsgemäße geschäumte Hohlprofil eine wesentlich höhere Belastung und Bruchfestigkeit aufweist.

Der Vergleich zwischen dem gemessenen DL bei Fₘₐₓ (N) Wert des ungeschäumten Hohlprofils mit 0,4 mm mit dem des geschäumten Hohlprofils mit 0,7 mm zeigt, dass das erfindungsgemäße geschäumte Hohlprofil eine wesentlich höhere Elastizität aufweist.

Die Vorteile des erfindungsgemäßen geschäumten Hohlprofils waren unerwartet und sehr überraschend.

Bei den thermischen Eigenschaften des Hohlprofils wurde eine Verbesserung um bis zu 45 % gemessen. Die thermischen Eigenschaften werden durch das in den Hohlräumen eingeschlossene Gas stark verbessert. Das in den Hohlräumen eingeschlossene ruhende Gas wirkt als ein sehr guter Isolator.

### Bezugszeichenliste:

- (I): polymerer Grundkörper

- (1): Seitenwand
- (2): Seitenwand
- (3): Innenwand
- (4): Außenwand
- (5): Hohlkammer
- (6,6'): Verstärkungsstreifen
- (7,7'): Verbindungsabschnitt
- (8): Isolationsfolie
- (9): äußere Dichtmasse
- (10): Glasscheibe
- (11): Glasscheibe
- (12): Trockenmittel
- (13): Dichtungsschicht

- α: Winkel zwischen Seitenwand 1,2 und Verbindungsabschnitt 7,7'

## Patentansprüche

1. Abstandshalter für eine Isolierverglasung, mindestens umfassend:
einen polymeren Grundkörper (I), mindestens umfassend zwei zueinander parallele Seitenwände (1,2), die miteinander verbunden sind durch eine Innenwand (3) und eine Außenwand (4), wobei die Seitenwände (1,2), die Innenwand (3) und die Außenwand (4) eine Hohlkammer (5) umgeben,
wobei der Grundkörper (I)
- einen Glasfaser-Anteil von 0 Gew.-% bis 40 Gew.-% aufweist und
- durch Hohlräume eine Reduktion des Gewichts von 10 Gew.-% bis 20 Gew.-% aufweist und wobei
- die Hohlräume durch Zugabe mindestens eines Schäumungsmittels erhalten werden und
- die Menge des zugegebenen Schäumungsmittels 0,5 Gew.-% bis 1,5 Gew.-% beträgt,
wobei der Abstandshalter zumindest auf der Außenwand (4) eine Isolationsfolie (8) aufweist, welche eine polymere Trägerfolie und mindestens eine metallische oder keramische Schicht enthält, die Dicke der polymeren Trägerfolie der Isolationsfolie (8) von 10 µm bis 100 µm und die Dicke der metallischen oder keramischen Schicht der Isolationsfolie (8) von 10 nm bis 1500 nm beträgt und wobei die Isolationsfolie (8) mindestens eine weitere polymere Schicht mit einer Dicke von 5 µm bis 100 µm enthält und die metallische oder keramische Schicht der Isolationsfolie (8) zumindest Eisen, Aluminium, Silber, Kupfer, Gold, Chrom, Siliziumoxid, Siliziumnitrid oder Legierungen oder Gemische oder Oxide davon enthält und wobei die polymere Trägerfolie der Isolationsfolie (8) zumindest Polyethylenterephthalat, Ethylenvinylalkohol, Polyvinylidenchlorid, Polyamide, Polyethylen, Poly-propylen, Silikone, Acrylonitrile, Polymethylacrylate oder Copolymere oder Gemische enthält.

2. Abstandshalter nach Anspruch 1, wobei die Reduktion des Gewichts von 11 Gew.-% bis 14 Gew.-% beträgt.

3. Abstandshalter nach Anspruch 1 oder 2, wobei die Menge des zugegebenen Schäumungsmittels 0,7 Gew.-% bis 1,0 Gew.-% beträgt.

4. Abstandshalter nach einem der Ansprüche 1 bis 3, wobei der Grundkörper (I) 1,0 Gew.-% bis 4,0 Gew.-% Farb-Masterbatch enthält.

5. Abstandshalter nach Anspruch 4, wobei der Grundkörper (I) 1,3 Gew.-% bis 2,0 Gew.-% Farb-Masterbatch enthält.

6. Abstandshalter nach einem der Ansprüche 1 bis 5, wobei der Grundkörper (I) bis zu einer angewandten Kraft von 1800 N bis 2500 N bruchfest ist.

7. Abstandshalter nach einem der Ansprüche 1 bis 6, wobei der Grundkörper (I) zumindest, Polyethylen (PE), Polycarbonate (PC), Polystyrol, Polybutadien, Polynitrile, Polyester, Polyurethane, Polymethylmetacrylate, Polyacrylate, Polyamide, Polyethylenterephthalat (PET), Polybutylenterephthalat (PBT), bevorzugt Polypropylen (PP), Acrylnitril-Butadien-Styrol (ABS), Acrylester-Styrol-Acrylnitril (ASA), Acrylnitril-Butadien-Styrol-Polycarbonat (ABS/PC), Styrol-Acrylnitril (SAN), Polyethylenterephthalat-Polycarbonat (PET/PC), Polybutylenterephthalat-Polycarbonat (PBT/PC) oder Copolymere oder Derivate oder Gemische davon enthält.

8. Abstandshalter nach einem der Ansprüche 1 bis 7, wobei der Grundkörper (I) zumindest, Styrol-Acrylnitril (SAN) oder Polypropylen (PP), oder Copolymere oder Derivate oder Gemische davon enthält.

9. Abstandshalter nach einem der Ansprüche 1 bis 8, wobei in jede Seitenwand (1,2) ein Verstärkungsstreifen (6,6') eingelagert ist, welcher zumindest ein Metall oder eine metallische Legierung, bevorzugt Stahl enthält und eine Dicke von 0,05 mm bis 1 mm, und eine Breite von 1 mm bis 5 mm aufweist.

10. Verfahren zur Herstellung eines Abstandshalters für eine Isolierverglasung nach einem der Ansprüche 1 bis 9, wobei
a) ein Gemisch aus mindestens einem Polymer, Farb-Masterbatch und Schäumungsmittel bereitgestellt wird,
b) das Gemisch in einem Extruder bei einer Temperatur von 170 °C bis 230 °C geschmolzen wird,
c) das Schäumungsmittel zersetzt wird und ein Gas die Schmelze aufschäumt,
d) die Schmelze durch ein Formwerkzeug gedrückt und ein Grundkörper (I) erhalten wird,
e) der Grundkörper (I) stabilisiert wird und
f) der Grundkörper (I) abgekühlt wird.

11. Verfahren nach Anspruch 10, wobei das Gemisch in einem Extruder bei einer Temperatur von 215 °C bis 220 °C geschmolzen wird.

12. Verfahren nach einem der Ansprüche 10 bis 11, wobei die Schmelze mit CO₂ aufgeschäumt wird.

13. Verwendung eines Abstandshalters nach einem der Ansprüche 1 bis 9 in Mehrfachverglasungen, bevorzugt in Isolierverglasungen, insbesondere in Fensterverglasungen oder Fassadenverglasungen von Gebäuden.

## Claims

1. Spacer for an insulating glazing unit, at least comprising:
a polymeric main body (I), at least comprising two parallel side walls (1,2) that are connected to one another by an inner wall (3) and an outer wall (4), wherein the side walls (1,2), the inner wall (3), and the outer wall (4) surround a hollow chamber (5),
wherein the main body (I)
- has a glass fiber content of 0 wt.-% to 40 wt.-% and
- has, due to hollow spaces, a weight reduction of 10 wt.-% to 20 wt.-% and wherein
- the hollow spaces are obtained by addition of at least one foaming agent and
- the amount of the foaming agent added is 0.5 wt.-% to 1.5 wt.-%,
wherein the spacer has, at least on the outer wall (4), an insulation film (8), which contains a polymeric carrier film and at least one metallic or ceramic layer, the thickness of the polymeric carrier film of the insulation film (8) is from 10 µm to 100 µm and the thickness of the metallic or ceramic layer of the insulation film (8) is from 10 nm to 1500 nm and wherein the insulation film (8) contains at least one more polymeric layer with a thickness of 5 µm to 100 µm and the metallic or ceramic layer of the insulation film (8) contains at least iron, aluminum, silver, copper, gold, chromium, silicon oxide, silicon nitride, or alloys or mixtures or oxides thereof and wherein the polymeric carrier film of the insulation film (8) contains at least polyethylene terephthalate, ethylene vinyl alcohol, polyvinylidene chloride, polyamides, polyethylene, polypropylene, silicones, acrylonitriles, polymethyl acrylates, or copolymers or mixtures.

2. Spacer according to claim 1, wherein the weight reduction is from 11 wt.-% to 14 wt.-%.

3. Spacer according to claim 1 or 2, wherein the amount of the foaming agent added is 0.7 wt.-% to 1.0 wt.-%.

4. Spacer according to one of claims 1 through 3, wherein the main body (I) contains 1.0 wt.-% to 4.0 wt.-% color masterbatch.

5. Spacer according to claim 4, wherein the main body (I) contains 1.3 wt.-% to 2.0 wt.-% color masterbatch.

6. Spacer according to one of claims 1 through 5, wherein the main body (I) is fracture-resistant up to an applied force of 1800 N to 2500 N.

7. Spacer according to one of claims 1 through 6, wherein the main body (I) contains at least polyethylene (PE), polycarbonates (PC), polystyrene, polybutadiene, polynitriles, polyesters, polyurethanes, polymethylmethacrylates, polyacrylates, polyamides, polyethylene terephthalate (PET), polybutylene terephthalate (PBT), preferably polypropylene (PP), acrylonitrile butadiene styrene (ABS), acrylonitrile styrene acrylester (ASA), acrylonitrile butadiene styrene/polycarbonate (ABS/PC), styrene acrylonitrile (SAN), polyethylene terephthalate/polycarbonate (PET/PC), polybutylene terephthalate/polycarbonate (PBT/PC) or copolymers or derivatives or mixtures thereof.

8. Spacer according to one of claims 1 through 7, wherein the main body (I) contains at least styrene acrylonitrile (SAN) or polypropylene (PP), or copolymers or derivatives or mixtures thereof.

9. Spacer according to one of claims 1 through 8, wherein embedded in each side wall (1,2) is a reinforcing strip (6,6') that contains at least a metal or a metallic alloy, preferably steel, and has a thickness of 0.05 mm to 1 mm, and a width of 1 mm to 5 mm.

10. Method for producing a spacer for an insulating glazing unit according to one of claims 1 through 9, wherein
a) a mixture of at least one polymer, color masterbatch, and foaming agent is prepared,
b) the mixture is melted in an extruder at a temperature of 170 °C to 230 °C,
c) the foaming agent is decomposed and a gas foams the molten material,
d) the molten material is pressed by a mold and a main body (I) is obtained,
e) the main body (I) is stabilized, and
f) the main body (I) is cooled.

11. Method according to claim 10, wherein the mixture is melted in an extruder at a temperature of 215 °C to 220 °C.

12. Method according to one of claims 10 through 11, wherein the molten material is foamed with CO₂.

13. Use of a spacer according to one of claims 1 through 9 in multiple glazing units, preferably in insulating glazing units, in particular in window glazings or façade glazings of buildings.

## Revendications

1. Espaceur pour vitrage isolant, comprenant au moins :
un corps principal polymère (I), comprenant au moins deux parois latérales parallèles (1, 2) qui sont reliées l'une à l'autre par une paroi intérieure (3) et une paroi extérieure (4), dans lequel les parois latérales (1, 2), la paroi intérieure (3) et la paroi extérieure (4) entourent une chambre creuse (5),
dans lequel le corps principal (I)
- a une teneur en fibres de verre de 0 % en poids à 40 % en poids et
- présente, grâce aux espaces creux, une réduction de poids de 10 % en poids à 20 % en poids et dans lequel
- les espaces creux sont obtenus par l'addition d'au moins un agent moussant et
- la quantité de l'agent moussant ajouté est de 0,5 % en poids à 1,5 % en poids,
dans lequel l'espaceur a, au moins sur la paroi extérieure (4), un film d'isolation (8), qui contient un film de support polymère et au moins une couche métallique ou céramique, l'épaisseur du film de support polymère du film d'isolation (8) est de 10 µm à 100 µm et l'épaisseur de la couche métallique ou céramique du film d'isolation (8) est de 10 nm à 1500 nm et dans lequel le film d'isolation (8) contient au moins une couche polymère supplémentaire avec une épaisseur de 5 µm à 100 µm et la couche métallique ou céramique du film d'isolation (8) contient au moins du fer, d'aluminium, d'argent, de cuivre, d'or, de chrome, d'oxyde de silicium, de nitrure de silicium, ou d'alliages ou de mélanges ou d'oxydes de ceux-ci et dans lequel le film support polymère du film isolant (8) contient au moins du polyéthylène téréphtalate, de l'éthylène alcool vinylique, du chlorure de polyvinylidène, des polyamides, du polyéthylène, du polypropylène, des silicones, des acrylonitriles, des polyméthyl acrylates, ou des copolymères ou des mélanges.

2. Espaceur selon la revendication 1, dans laquelle la réduction de poids est de 11 % en poids à 14 % en poids.

3. Espaceur selon la revendication 1 ou 2, dans lequel la quantité de l'agent moussant ajouté est de 0,7 % en poids à 1,0 % en poids.

4. Espaceur selon l'une des revendications 1 à 3, dans lequel le corps principal (I) contient 1,0 % en poids à 4,0 % en poids de mélange maître de couleur.

5. Espaceur selon la revendication 4, dans lequel le corps principal (I) contient 1,3 % en poids à 2,0 % en poids de mélange-maître de couleur.

6. Espaceur selon l'une des revendications 1 à 5, dans laquelle le corps principal (I) est résistant à la rupture jusqu'à une force appliquée de 1800 N à 2500 N.

7. Espaceur selon l'une des revendications 1 à 6, dans lequel le corps principal (I) contient au moins du polyéthylène (PE), des polycarbonates (PC), du polystyrène, du polybutadiène, des polynitriles, des polyesters, des polyuréthanes, des polyméthacrylates de méthyle, des polyacrylates, des polyamides, du polyéthylène téréphtalate (PET), du polybutylène téréphtalate (PBT), de préférence le polypropylène (PP), l'acrylonitrile butadiène styrène (ABS), l'acrylonitrile styrène acrylester (ASA), l'acrylonitrile butadiène styrène/polycarbonate (ABS/PC), le styrène acrylonitrile (SAN), le polyéthylène téréphtalate/polycarbonate (PET/PC), le polybutylène téréphtalate/polycarbonate (PBT/PC) ou leurs copolymères ou dérivés ou mélanges.

8. Espaceur selon l'une des revendications 1 à 7, dans lequel le corps principal (I) contient au moins du styrène acrylonitrile (SAN) ou du polypropylène (PP), ou des copolymères ou dérivés ou mélanges de ceux-ci.

9. Espaceur selon l'une des revendications 1 à 8, dans laquelle est noyée dans chaque paroi latérale (1, 2) une bande de renforcement (6, 6') qui contient au moins un métal ou un alliage métallique, de préférence de l'acier, et qui présente une épaisseur de 0,05 mm à 1 mm, et une largeur de 1 mm à 5 mm.

10. Procédé de fabrication d'un espaceur pour vitrage isolant selon l'une des revendications 1 à 9, dans lequel
a) on prépare un mélange d'au moins un polymère, un mélange maître de couleur et un agent moussant,
b) le mélange est fondu dans une extrudeuse à une température de 170 °C à 230 °C,
c) l'agent moussant est décomposé et un gaz fait mousser le matériau fondu,
d) le matériau fondu est pressé par un moule et un corps principal (I) est obtenu,
e) le corps principal (I) est stabilisé, et
f) le corps principal (I) est refroidi.

11. Procédé selon la revendication 10, dans lequel le mélange est fondu dans une extrudeuse à une température de 215 °C à 220 °C.

12. Procédé selon l'une des revendications 10 à 11, dans lequel on fait mousser le matériau fondu avec du CO₂.

13. Utilisation d'un espaceur selon l'une des revendications 1 à 9 dans des vitrages multiples, de préférence dans des vitrages isolants, en particulier dans des vitrages de fenêtres ou des vitrages de façades de bâtiments.
